# FASCICULE DE BREVET EUROPEEN

(11) **EP 1 813 456 B1**
(45) Date de publication et mention de la délivrance du brevet: **02.07.2008**
(21) Numéro de dépôt: 07300740.3
(22) Date de dépôt: 24.01.2007
(51) Int. Cl.: B60J 5/06, B60K 15/05, E05B 65/12

(54) **Dispositif de blocage de l'ouverture d'une porte latérale coulissante d'un véhicule et véhicule le comportant**
Vorrichtung zur Blockierung des Öffnens einer seitlichen Schiebetür eines Fahrzeugs und diese Vorrichtung umfassendes Fahrzeug
Device for blocking the opening of a sliding side door of a vehicle and vehicle comprising said device

(30) Priorité: 25.01.2006 FR 0600682
(43) Date de publication de la demande: 01.08.2007
(73) Titulaire: Peugeot Citroën Automobiles, 78140 Vélizy-Villacoublay (FR)
(72) Inventeur: Mignon, Stéphane, 78380 Bougival (FR)
(74) Mandataire: Gendraud, Pierre

(56) Documents cités:
- EP-A2- 0 822 108
- EP-A2- 0 854 060
- EP-A2- 0 913 285
- JP-A- 11 115 495
- US-A- 5 520 431

## Description

La présente invention concerne un dispositif de blocage de l'ouverture d'une porte latérale coulissante d'un véhicule, comprenant des moyens d'arrêt de la porte latérale coulissante, adaptés pour être déplacés entre une position de blocage de la porte et une position de libération de la porte, une trappe de réservoir et un dormant de support de trappe, la trappe comprenant un volet et un charnon solidaire du volet, la trappe étant adaptée pour être déplacée par rapport au dormant entre une position d'ouverture et une position de fermeture de l'extrémité de remplissage du réservoir, des moyens d'entraînement des moyens d'arrêt sous la commande du mouvement de la trappe, comprenant une came solidaire de la trappe et un suiveur de came, la came et le suiveur de came étant propres à coopérer pour entraîner les moyens d'arrêt en position de blocage, quand la trappe est en position d'ouverture, et en position de libération quand la trappe est en position de fermeture.

De tels dispositifs empêchent d'ouvrir par inadvertance une porte latérale coulissante alors que la trappe de réservoir, située du côté de la porte, est ouverte, ce qui provoquerait l'endommagement de la porte et de la trappe.

Le brevet EP 0 854 060 A se rapporte à un dispositif de blocage d'une porte coulissante de véhicule automobile. Ce dispositif de blocage est actionné par l'ouverture de la trappe permettant d'accéder au réservoir d'essence du véhicule.

EP 0 913 285 décrit un dispositif dans lequel une rampe de guidage des moyens d'entraînement est fixée sur le volet de la trappe, par exemple sur le côté intérieur du volet.

Un tel dispositif occupe un encombrement minimal en étant entièrement disposé selon l'axe vertical du véhicule mais présente l'inconvénient d'être complexe à réaliser. En effet, dans le cas où la trappe et sa rampe sont réalisées en matériau plastique, il est difficile de maîtriser les retassures ; dans le cas où elles sont réalisées en tôle la mise au point de l'outillage est complexe. De plus, cette solution pose également un problème de style car la rampe est visible par l'utilisateur lors de l'ouverture de la trappe.

L'invention a pour but de résoudre ce problème en apportant une solution au verrouillage d'une porte latérale coulissante lorsque la trappe de réservoir est ouverte, avec un encombrement minimal et pour un coût réduit.

A cet effet, l'invention a pour objet un dispositif de blocage de l'ouverture d'une porte latérale coulissante d'un véhicule du type précité, caractérisé en ce que la came est solidaire du charnon et espacée du volet.

Suivant d'autres caractéristiques de l'invention :
- la came est fixée par une de ses extrémités au charnon ;
- les moyens d'entraînement comprennent un câble disposé entre le suiveur de came et les moyens d'arrêt de la porte ;
- le suiveur de came est un piston disposé dans un cylindre creux de guidage et le dispositif comprend un ressort interposé entre le piston et une protubérance appartenant au cylindre ;
- la trappe est montée rotative par rapport au dormant ;
- la trappe est en position d'ouverture quand le volet fait un angle de 90°;
- la came est une rampe hélicoïdale décrivant une hélice de rayon constant et présentant, selon l'axe de l'hélice, une dénivellation correspondant à l'amplitude maximale de la course du piston dans le cylindre creux lors des manoeuvres de fermeture et d'ouverture de la trappe, l'axe de l'hélice étant l'axe de rotation de la trappe ;
- le charnon présente la forme d'un col de cygne ;
- la trappe comprend un bras de retenue de l'extrémité de la rampe, laquelle rampe s'écarte du col de cygne à son extrémité libre ; et
- les moyens d'arrêt de la porte comprennent un crochet adapté pour être déplacé entre une position d'accrochage de la porte et une position de libération de la porte, la position d'accrochage du crochet correspondant à la position de blocage des moyens d'arrêt.

L'invention a également pour objet un véhicule automobile comportant un dispositif de blocage de l'ouverture d'une porte latérale coulissante tel que défini précédemment.

L'invention sera mieux comprise à la lecture de la description qui va suivre, donnée uniquement à titre d'exemple et faite en se référant aux dessins annexés, sur lesquels :
- les figures 1 et 2 sont des vues schématiques du véhicule, la trappe du dispositif de blocage suivant l'invention étant représentée respectivement en position de fermeture et d'ouverture,
- la figure 3 est une vue partielle en perspective du dispositif de blocage, en position de fermeture de la trappe ;
- la figure 4 est une vue de détail en perspective du piston ; et
- les figures 5 et 6 sont des vues schématiques du dispositif en coupe horizontale en position respectivement de fermeture et d'ouverture de la trappe.

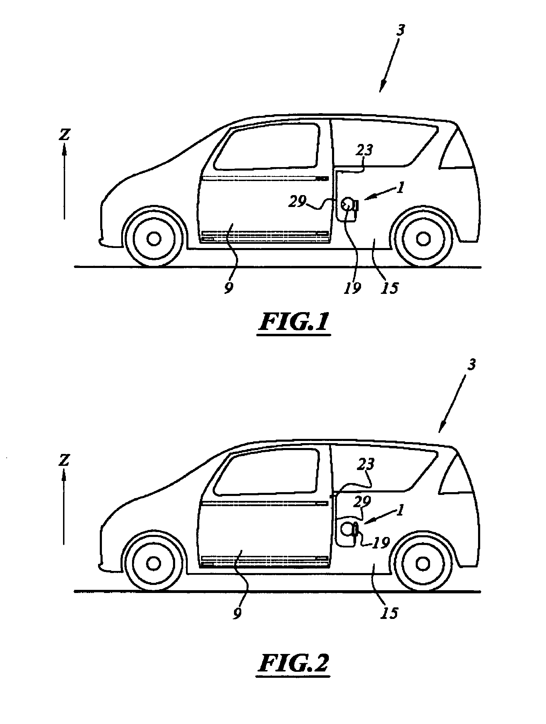

Le dispositif 1 est destiné à équiper l'extrémité de remplissage d'un réservoir de carburant d'un véhicule 3 représenté sur les figures 1 et 2 ; il est situé au voisinage d'une porte 9 latérale coulissante, sur une aile 15 de ce véhicule 3.

Le dispositif 1 comprend essentiellement une trappe 19, un crochet 23 et un câble 29 reliant le crochet 23 à la trappe 19. Le câble 29 est essentiellement orienté selon l'axe Z-Z vertical du véhicule 3.

La porte latérale 9 est montée coulissante grâce à différents rails montés sur l'aile 15 ou la porte 9 du véhicule 3. La porte 9 est adaptée pour être déplacée entre une position de fermeture et une position d'ouverture.

Le crochet 23 est monté rotatif autour d'un axe solidaire de l'aile 15. Il est adapté pour être déplacé entre une position d'accrochage de la porte 9 et une position de libération de la porte 9. Quand le crochet 23 est en position de libération de la porte 9 (figure 1), celle-ci est libre de coulisser sur ses rails vers sa position d'ouverture. Quand le crochet 23 est en position d'accrochage de la porte 9 (figure 2), celle-ci est bloquée en position de fermeture.

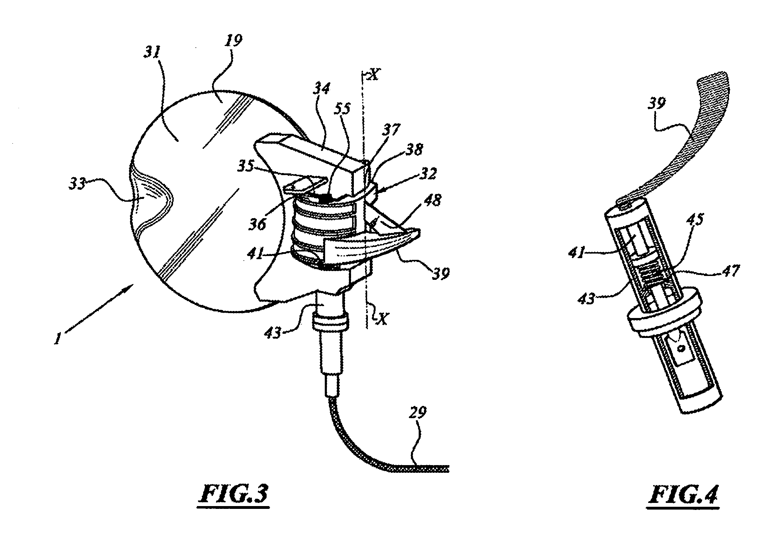

La trappe 19, représentée sur la figure 3, comprend essentiellement un volet 31 et un charnon 32. Le volet 31 comporte, sur sa périphérie, une empreinte 33 de passage d'un doigt, adaptée pour faciliter l'ouverture manuelle de la trappe 19.

Le volet 31 est monté rotatif, par son charnon 32, autour d'un dormant 34 suivant un axe d'articulation X-X. Le dormant 34 est solidaire de l'aile 15 du véhicule 3. L'axe de rotation X-X est situé le long d'un bord du dormant 34, opposé au volet 31, du côté extérieur par rapport au sens d'ouverture de la trappe 19. Le dormant 34 présente une ouverture 35 de circulation du charnon 32. Le charnon 32 est en forme de col de cygne, adapté pour s'articuler sur le dormant 34. L'axe de rotation X-X définit l'extrémité libre du col de cygne. Le col de cygne présente un tronçon circulaire 36 centré sur l'axe X-X, engagé dans l'ouverture 35. Ce tronçon s'étend sur environ 90°. Il est relié perpendiculairement à la surface du volet 31. Le tronçon circulaire 36 est relié à l'axe de rotation X-X par un tronçon rectiligne 37 s'étendant généralement radialement par rapport au tronçon circulaire 36.

A son extrémité de liaison à l'axe de rotation X-X, le tronçon rectiligne 37 présente un coude 38 assurant un décalage correspondant à l'épaisseur du dormant 34.

La trappe 19 est en position de fermeture quand le volet 31 est rabattu le long de l'aile 15. Elle est en position d'ouverture quand le volet 31 est perpendiculaire à l'aile 15.

La trappe 19 comprend une rampe 39 partant du charnon 32 et espacée du volet 31. Le volet 31, le charnon 32 et la rampe 39 sont, de préférence, venus de matière.

Le câble 29 comprend à son extrémité proximale un piston 41, disposé à l'intérieur d'un cylindre 43 creux de guidage, visible sur la figure 4. Le piston 41 et son cylindre 43 sont disposés en regard de la rampe 39,. La rampe 39 forme une surface de came du piston 41 qui est coulissant à l'intérieur du cylindre creux 43. De plus, comme le montre la figure 4, le piston 41 est sollicité vers la rampe 39 par un ressort 45 de rappel interposé entre le piston 41 et un épaulement interne 47 du cylindre creux 43.

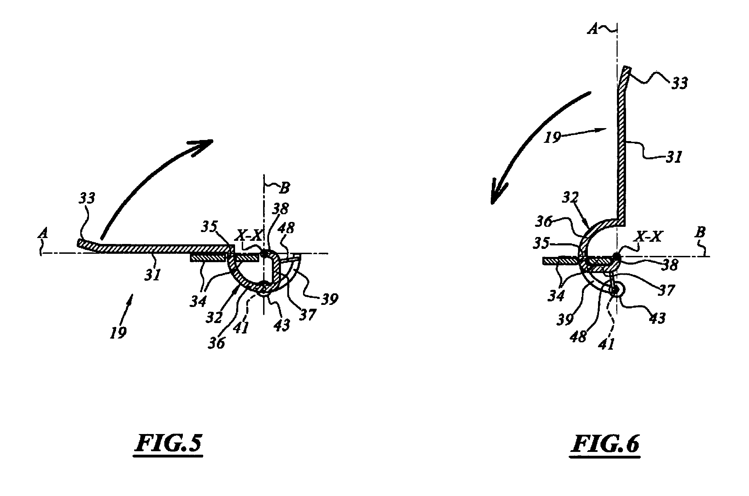

Comme le montrent les figures 5 et 6, la rampe 39 en hélice décrit un quart de cercle, dans un plan perpendiculaire au plan du volet 31. Dans ce plan, la rampe 39 se relie tangentiellement au tronçon circulaire 36 et présente un même rayon de courbure. La rampe en hélice 39 présente une dénivellation par rapport à l'axe vertical Z du véhicule, correspondant à l'amplitude maximale de la course du piston 41 dans le cylindre creux 43. Cette dénivellation est avantageusement comprise entre 10 et 20 mm, de l'ordre de 15 mm, par exemple.

La rampe 39 est fixée, espacée du volet 31, par une de ses extrémités, au charnon 32 à partir du milieu du col de cygne, c'est-à-dire dans la région de liaison des tronçons circulaire 36 et rectiligne 37. Le profil en hélice décrit par la rampe 39 à partir du charnon 32 s'éloigne du volet 31. Un bras venu de matière 48 allant du charnon 32 et, plus précisément, de la paroi extérieure du tronçon rectiligne 37 à l'extrémité libre de la rampe 39 vient renforcer celle-ci.

De plus, si l'on découpe l'espace en quatre quadrants définis par les plans A et B respectivement parallèle et perpendiculaire au volet 31 et passant chacun par l'axe X-X de rotation du charnon 32, le volet 31 et la rampe 39 sont situés chacun dans des quadrants diamétralement opposés par rapport à l'axe X-X.

Le dispositif 1 comprend un ressort de torsion 55 à passage de point mort, visible sur la figure 3, intercalé entre le charnon 32 et le dormant 34. Le point mort du ressort 55 est passé juste avant d'atteindre la position d'ouverture de la trappe 19. Le ressort 55 sollicite la trappe 19, en rotation par rapport à l'axe X-X du dormant 34, en permanence vers la position de fermeture, sauf quand la trappe est en position d'ouverture, le point mort ayant été passé.

Suite à l'ouverture de la trappe 19, pour remplir le réservoir par exemple, manuellement grâce à l'empreinte 33, la trappe 19 reste en position d'ouverture (figure 6) car la sollicitation du ressort de torsion 55 n'est plus effective. Pendant le mouvement d'ouverture, la rampe 39, solidaire du charnon 32, pivote avec la rotation du volet 31, et entraîne le piston 41 qui coulisse dans le cylindre creux 43. Le câble 29, attaché par son extrémité proximale, est entraîné par le piston 41, et son extrémité distale entraîne le crochet 23 en position d'accrochage de la porte 9. La porte 9 est ainsi bloquée dans son mouvement de coulissement le long des rails. La porte 9 est verrouillée en position de fermeture quand la trappe 19 est en position d'ouverture.

Quand on ferme la trappe 19, en la rabattant contre l'aile 15, la rampe 39 revient à sa position initiale (figure 5). Le mouvement de fermeture de la trappe 19 est facilité par le ressort de torsion 55. Le piston 41 est guidé par la rampe 39 formant surface de came, et vient comprimer le ressort 45. L'extrémité distale du câble 29 entraîne le crochet 23 en position de libération de la porte 9. Celle-ci est alors libre de coulisser le long des rails.

La dénivellation de la rampe 39 en hélice est calculée de façon à permettre la manoeuvre du crochet entre une position d'accrochage de la porte 9 et une position de libération de la porte 9.

Selon une variante, la rampe en hélice peut être aménagée à l'intérieur du tronçon circulaire 36 du charnon 32.

Ainsi le dispositif selon l'invention permet un verrouillage d'une porte latérale coulissante lors de l'ouverture de la trappe à carburant, avec un encombrement minimal selon l'axe Z-Z du véhicule et sans ajout de pièce supplémentaire.

## Revendications

1. Dispositif (1) de blocage de l'ouverture d'une porte (9) latérale coulissante d'un véhicule (3) comprenant :
- des moyens (23) d'arrêt de la porte (9) latérale coulissante, adaptés pour être déplacés entre une position de blocage de la porte (9) et une position de libération de la porte (9),
- une trappe (19) de réservoir et un dormant (34) de support de trappe (19), la trappe (19) comprenant un volet (31) et un charnon (32) solidaire du volet (31), le volet (31) étant monté rotatif, par le charnon (32), autour d'un dormant (34), la trappe (19) étant montée rotative par rapport au dormant (34), entre une position d'ouverture et une position de fermeture de l'extrémité de remplissage du réservoir,
- des moyens (29) d'entraînement des moyens d'arrêt (23) sous la commande du mouvement de la trappe (19), comprenant une came (39) solidaire de la trappe (19) et un suiveur de came (41), la came (39) et le suiveur de came (41) étant propres à coopérer pour entraîner les moyens d'arrêt (23) en position de blocage, quand la trappe (19) est en position d'ouverture, et en position de libération quand la trappe (19) est en position de fermeture, la came (39) étant solidaire du charnon (32) et espacée du volet (31),
**caractérisé en ce que** la came est une rampe (39) hélicoïdale décrivant une hélice de rayon constant et présentant, selon l'axe (X-X) de l'hélice, une dénivellation correspondant à l'amplitude maximale de la course du piston (41) dans le cylindre creux (43) lors des manoeuvres de fermeture et d'ouverture de la trappe (19), l'axe (X-X) de l'hélice étant l'axe de rotation de la trappe (19).

2. Dispositif (1) selon la revendication 1, **caractérisé en ce que** la came (39) est fixée par une de ses extrémités au charnon (32).

3. Dispositif (1) selon la revendication 1 ou 2, **caractérisé en ce que** les moyens d'entraînement comprennent un câble (29) disposé entre le suiveur de came (41) et les moyens d'arrêt (23) de la porte (9).

4. Dispositif (1) selon l'une quelconque des revendications précédentes, **caractérisé en ce que** le suiveur de came est un piston (41) disposé dans un cylindre creux (43) de guidage et **en ce que** le dispositif comprend un ressort (45) interposé entre le piston (41) et une protubérance appartenant au cylindre (43).

5. Dispositif (1) selon la revendication 1, **caractérisé en ce que** la trappe (19) est en position d'ouverture quand le volet (31) fait un angle de 90°.

6. Dispositif (1) selon l'une quelconque des revendications 3 à 5, **caractérisé en ce que** le charnon (32) présente la forme d'un col de cygne.

7. Dispositif (1) selon les revendications 2 et 6, **caractérisé en ce que** la trappe comprend un bras (48) de retenue de l'extrémité de la rampe (39), laquelle rampe s'écarte du col de cygne (32) à son extrémité libre.

8. Dispositif (1) selon l'une quelconque des revendications précédentes, **caractérisé en ce que** les moyens (23) d'arrêt de la porte (9) comprennent un crochet (23) adapté pour être déplacé entre une position d'accrochage de la porte (9) et une position de libération de la porte (9), la position d'accrochage du crochet (23) correspondant à la position de blocage des moyens d'arrêt.

9. Véhicule automobile (3) **caractérisé en ce qu'**il comporte un dispositif (1) de blocage de l'ouverture d'une porte (9) latérale coulissante selon l'une quelconque des revendications précédentes.

## Claims

1. Device (1) for preventing a sliding side door (9) of a vehicle (3) from opening, comprising:
- means (23) for stopping the sliding side door (9), said means being designed to be moved between a door (9)-locked position and a door (9)-released position,
- a tank flap (19) and a flap (19)-supporting frame (34), the flap (19) comprising a cover (31) and a hinge bracket (32) connected to the cover (31), the cover (31) being mounted rotatably, by the hinge bracket (32), about a frame (34), the flap (19) being mounted rotatably relative to the frame (34) between a position in which the tank filling end is open and a position in which it is closed,
- means (29) for driving the stopping means (23) under the control of the movement of the flap (19), comprising a cam (39) connected to the flap (19) and a cam follower (41), the cam (39) and the cam follower (41) being able to act together to drive the stopping means (23) to the locked position when the flap (19) is in the open position, and to the released position when the flap (19) is in the closed position, the cam (39) being connected to the hinge bracket (32) and being at a distance from the cover (31),
**characterized in that** the cam is a helical ramp (39) describing a helix of constant radius and exhibiting, parallel to the helix axis (X-X), a drop corresponding to the maximum amplitude of the stroke of the piston (41) in the hollow cylinder (43) during the closing and opening movements of the flap (19), the helix axis (X-X) being the axis of rotation of the flap (19).

2. Device (1) according to Claim 1, **characterized in that** the cam (39) is attached by one of its ends to the hinge bracket (32).

3. Device (1) according to Claim 1 or 2, **characterized in that** the drive means comprise a cable (29) arranged between the cam follower (41) and the door (9)-stopping means (23).

4. Device (1) according to any one of the preceding claims, **characterized in that** the cam follower is a piston (41) arranged in a hollow guide cylinder (43) and **in that** the device includes a spring (45) interposed between the piston (41) and a protuberance belonging to the cylinder (43).

5. Device (1) according to Claim 1, **characterized in that** the flap (19) is in the open position when the cover (31) is at an angle of 90°.

6. Device (1) according to any one of Claims 3 to 5, **characterized in that** the hinge bracket (32) is gooseneck-shaped.

7. Device (1) according to Claims 2 and 6, **characterized in that** the flap comprises an arm (48) for retaining the end of the ramp (39), which ramp moves away from the gooseneck (32) at its free end.

8. Device (1) according to any one of the preceding claims, **characterized in that** the door (9)-stopping means (23) comprise a hook (23) designed to be moved between a door (9)-hooked position and a door (9)-released position, the hooked position of the hook (23) corresponding to the locked position of the stopping mans.

9. Motor vehicle (3) **characterized in that** it comprises a device (1) for preventing a sliding side door (9) from opening, according to any one of the preceding claims.

## Patentansprüche

1. Vorrichtung (1) zum Blockieren der Öffnung einer seitlichen Schiebetür (9) eines Fahrzeugs (3), das aufweist:
- Mittel (23) zum Arretieren der seitlichen Schiebetür (9), die geeignet sind, um zwischen einer Blockierstellung der Tür (9) und einer Freigabestellung der Tür (9) verschoben zu werden,
- einen Tankdeckel (19) und einen Stützrahmen (34) für den Deckel (19), wobei der Deckel (19) eine Klappe (31) und einen Scharnierbeschlag (32) aufweist, der fest mit der Klappe (31) verbunden ist, wobei die Klappe (31) durch den Scharnierbeschlag (32) um einen Rahmen (34) drehbar montiert ist, wobei der Deckel (19) bezüglich des Rahmens (34) zwischen einer Öffnungsstellung und einer Schließstellung des Füllendes des Tanks drehbar montiert ist,
- Mittel (29) zum Antrieb der Arretiermittel (23) unter der Steuerung der Bewegung des Deckels (19), die eine fest mit dem Deckel (19) verbundene Nocke (39) und einen Nockenfolger (41) aufweisen, wobei die Nocke (39) und der Nockenfolger (41) fähig sind, zusammenzuwirken, um die Arretiermittel (23) in die Blockierstellung anzutreiben, wenn der Deckel (19) in der Öffnungsstellung ist, und in die Freigabestellung anzutreiben, wenn der Deckel (19) in der Schließstellung ist, wobei die Nocke (39) fest mit dem Scharnierbeschlag (32) verbunden und von der Klappe (31) entfernt ist,
**dadurch gekennzeichnet, dass** die Nocke eine schraubenförmige Rampe (39) ist, die eine Schraubenlinie mit konstantem Radius beschreibt und gemäß der Achse (X-X) der Schraubenlinie eine Absenkung entsprechend der maximalen Amplitude des Hubs des Kolbens (41) im Hohlzylinder (43) bei Schließ- und Öffnungsbetätigungen des Deckels (19) aufweist, wobei die Achse (X-X) der Schraubenlinie die Drehachse des Deckels (19) ist.

2. Vorrichtung (1) nach Anspruch 1, **dadurch gekennzeichnet, dass** die Nocke (39) mit einem ihrer Enden am Scharnierbeschlag (32) befestigt ist.

3. Vorrichtung (1) nach Anspruch 1 oder 2, **dadurch gekennzeichnet, dass** die Antriebsmittel ein Kabel (29) aufweisen, das zwischen dem Nockenfolger (41) und den Arretiermitteln (23) der Tür (9) angeordnet ist.

4. Vorrichtung (1) nach einem der vorhergehenden Ansprüche, **dadurch gekennzeichnet, dass** der Nockenfolger ein Kolben (41) ist, der in einem Führungs-Hohlzylinder (43) angeordnet ist, und dass die Vorrichtung eine Feder (45) aufweist, die zwischen dem Kolben (41) und einem zum Zylinder (43) gehörenden Vorsprung angeordnet ist.

5. Vorrichtung (1) nach Anspruch 1, **dadurch gekennzeichnet, dass** der Deckel (19) in der Öffnungsstellung ist, wenn die Klappe (31) einen Winkel von 90° bildet.

6. Vorrichtung (1) nach einem der Ansprüche 3 bis 5, **dadurch gekennzeichnet, dass** der Scharnierbeschlag (32) die Form eines Schwanenhalses hat.

7. Vorrichtung (1) nach den Ansprüchen 2 und 6, **dadurch gekennzeichnet, dass** der Deckel einen Arm (48) zum Zurückhalten des Endes der Rampe (39) aufweist, wobei die Rampe sich an ihrem freien Ende vom Schwanenhals (32) entfernt.

8. Vorrichtung (1) nach einem der vorhergehenden Ansprüche, **dadurch gekennzeichnet, dass** die Arretiermittel (23) der Tür (9) einen Haken (23) aufweisen, der geeignet ist, um zwischen einer Stellung des Festhakens der Tür (9) und einer Stellung der Freigabe der Tür (9) verschoben zu werden, wobei die Festhakstellung des Hakens (23) der Blockierstellung der Arretiermittel entspricht.

9. Kraftfahrzeug (3), **dadurch gekennzeichnet, dass** es eine Blockiervorrichtung (1) der Öffnung einer seitlichen Schiebetür (9) nach einem der vorhergehenden Ansprüche aufweist.
